# EUROPÄISCHE PATENTSCHRIFT

(11) **EP 1 211 548 B1**
(45) Veröffentlichungstag und Bekanntmachung des Hinweises auf die Patenterteilung: **21.09.2005**
(21) Anmeldenummer: 01127198.8
(22) Anmeldetag: 16.11.2001
(51) Int. Cl.: G02F 1/133, G05D 23/24

(54) **Display mit einer Heizung**
Display with a heater
Dispositif d'affichage muni d'un élément de chauffage

(30) Priorität: 30.11.2000 DE 10059518
(43) Veröffentlichungstag der Anmeldung: 05.06.2002
(73) Patentinhaber: SIEMENS AKTIENGESELLSCHAFT, 80333 München (DE)
(72) Erfinder: Brandt, Peter, 63739 Aschaffenburg (DE); Siegel, Wolfgang, 78727 Oberndorf (DE)

(56) Entgegenhaltungen:
- EP-A- 0 239 247
- US-A- 4 093 355
- US-A- 4 621 261
- US-A- 6 089 751

## Beschreibung

Die Erfindung betrifft ein Display mit einer Heizung gemäß dem Oberbegriff des ersten Anspruchs. Danach betrifft die Erfindung insbesondere ein Display mit einer Heizung, wobei das Display mindestens ein Displayglas besitzt und wobei die Heizung ein elektrisch betriebenes Heizelement besitzt, wobei das Heizelement aus einer dünnen, vorzugsweise transparenten Schicht aus einem einen elektrischen Widerstand bildenden Werkstoff besteht, wobei die Schicht auf dem mindestens einen Displayglas flächig aufgetragen oder in dem Display flächig eingebettet ist.

Beispielsweise werden in der Fahrzeugtechnik zunehmend Displays eingesetzt, z. B. LC-Displays (Flüssigkristallanzeigen), um dem Fahrer Informationen zu übermitteln. Ein solches Display kann z. B. integraler Bestandteil eines Kombiinstruments sein, das im Armaturenbrett des Fahrzeugs angeordnet ist. Von einem im Fahrzeug verbauten Display wird auch bei tiefen Umgebungstemperaturen volle Funktionsfähigkeit erwartet, obwohl z. B. bei einem LC-Display bei tiefen Umgebungstemperaturen der Kontrast und damit die Qualität der Anzeige merklich abnehmen. Aus diesem Grund erfordern in einem Fahrzeug verbaute Displays im Regelfall eine Heizung, um sie bei tiefen Umgebungstemperaturen innerhalb kurzer Zeit auf eine geeignete Betriebstemperatur zu erwärmen.

Bei der hier in Rede stehenden Heizung erwärmt das Heizelement das Display in Abhängigkeit von der Stromstärke, die sich einstellt, wenn die auf dem Display aufgetragene, als ein elektrischer Widerstand ausgebildete Schicht an eine Spannungsversorgung angeschlossen wird. Im Regelfall besteht diese Spannungsversorgung aus dem Bordnetz des Fahrzeugs, wobei das Heizelement unmittelbar, d. h. ohne Zwischenschaltung einer spannungsstabilisierenden Schaltungsanordnung an das Bordnetz anschließbar sein soll. Im Hinblick auf die mit dem Heizelement erzeugbare Heizleistung gilt es aber zu beachten, daß die Höhe der am Heizelement anliegenden Spannung je nach Fahrzeugkategorie unterschiedliche Nennwerte aufweisen kann und die Spannung des Bordnetzes während des Betriebs des Fahrzeugs erheblichen Schwankungen unterworfen ist. Überdies weist ein Heizelement, das aus einer auf einem Displayglas aufgetragenen dünnen Schicht bzw. aus einer in dem Displayglas eingebetteten dünnen Schicht besteht, in seinem Wert für den Widerstand eine große Streubreite auf, weil im Fertigungsprozeß sowohl die Schichtdicke und damit der Flächenwiderstand als auch die chemische Zusammensetzung des Werkstoffauftrags größeren Toleranzen unterliegen. Weil sowohl die am Heizelement anliegende Spannung als auch der Wert für den das Heizelement bildenden Widerstand innerhalb bestimmter Grenzen erheblich variieren, bedarf es zur Erzeugung einer bedarfsgerechten Heizleistung, die für ihre optimale Wirkung eine aktuell vorliegende Umgebungstemperatur zu berücksichtigen hat, weiterer Maßnahmen. Andernfalls mag die erzeugte Wärme nicht ausreichen, um das Display in kurzer Zeit in einen betriebsfähigen Zustand zu versetzen, oder das Display selbst bzw. dessen zumeist aus einem Kunststoff bestehenden Einfassungen mögen durch Überhitzung zerstört werden.

Aus der US-A-6 989 751 ist ein Display mit einer Heizung mit den Merkmalen des Oberbegriffs von Anspruch 1 bekannt.

Es ist nun die Aufgabe der vorliegenden Erfindung, ein Display mit einer Heizung aufzuzeigen, wobei die Heizung in Abhängigkeit von der Umgebungstemperatur trotz erheblicher Schwankungen in der Spannungsversorgung, an die das Heizelement angeschlossen ist, und trotz einer Streubreite in den Widerstandswerten des Heizelementes eine Heizleistung sicherstellt, die das Display auch bei tiefen Umgebungstemperaturen in kurzer Zeit in einen betriebsfähigen Zustand versetzt.

Die Aufgabe wird durch ein Display mit einer Heizung mit den Merkmalen des ersten Anspruchs gelöst. Dabei besitzt die Heizung ein elektrisch betriebenes, mit einer Spannungsversorgung verbundenes Heizelement, wobei das Display mindestens ein Displayglas besitzt und das Heizelement aus einer dünnen, vorzugsweise transparenten Schicht besteht, wobei die Schicht aus einem einen elektrischen Widerstand bildenden Werkstoff besteht, wobei die Schicht auf dem mindestens einen Displayglas flächig aufgetragen oder in dem Display flächig eingebettet ist. Die Lösung zeichnet sich dadurch aus,
a) daß eine erste Meßeinrichtung vorgesehen ist, die den Widerstandswert des Heizelementes ermittelt,
b) daß eine zweite Meßeinrichtung vorgesehen ist, die die Höhe der am Heizelement anliegenden Spannung ermittelt,
c) daß eine dritte Meßeinrichtung vorgesehen ist, die die aktuelle Umgebungstemperatur am Display erfaßt,
d) daß ein Speicher vorgesehen ist, der den ermittelten Widerstandswert des Heizelementes speichert,
e) daß eine Logikeinheit vorgesehen ist, die für den speicherten Widerstandswert in Abhängigkeit von der ermittelten Spannung und der ermittelten Umgebungstemperatur eine Bestromungsdauer für das Heizelement ermittelt, die notwendig ist, um diejenige Heizleistung aufzubringen, damit sich das Display innerhalb einer vorgegebenen Zeit auf eine bestimmte Betriebstemperatur erwärmt, und
f) daß ein von der Logikeinheit betätigtes Schaltelement vorgesehen ist, das für die ermittelte Bestromungsdauer den Stromfluß durch das mit der Spannungsversorgung verbundene Heizelement regelt.

Im Ergebnis entsteht durch die vorgenannten Maßnahmen für die Heizung eines in einem Fahrzeug betriebenen Displays eine Regelung, die den durch das Heizelement fließenden Strom in Abhängigkeit von der gemessenen Umgebungstemperatur, dem tatsächlichen Widerstandswert des Heizelementes, der Höhe der am Heizelement anliegenden Spannung sowie unter Berücksichtigung der erforderlichen Heizleistung regelt, um das Display innerhalb einer vorgegebenen Zeit auf eine bestimmte Betriebstemperatur zu erwärmen. Dabei beeinflußt eine Logikeinheit mittels eines Schaltelements den Stromfluß durch das Heizelement.

Anhand einer anliegenden **Figur** mit einer vereinfachten Schemazeichnung wird die vorgeschlagene Regelung nun noch näher erläutert.

In einem in einem Fahrzeug angeordneten Kombiinstrument 1 befindet sich ein beheizbares LC-Display 2. Dabei bezieht sich in dieser Figur das Bezugszeichen 2 auf das Display samt dem daran angeordneten bzw. darin eingebetteten Heizelement. In dem hier zugrunde liegenden Fall besteht die Heizung des Displays im wesentlichen aus einem Heizelement, das durch eine nur wenige Nanometer dicke, vorzugsweise transparente Schicht gebildet wird, wobei die Schicht zum Beispiel aus Indiumzinnoxid besteht, was ein einen elektrischen Widerstand bildender Werkstoff ist. LC-Displays weisen in der Regel mindestens zwei flächig zusammengefügte Glasscheiben auf, die an ihren gegenseitigen Auflageflächen eine Flüssigkristallschicht umschließen. Die das Heizelement bildende Schicht ist entweder auf einer Außenseite einer dieser Glasscheiben flächig aufgetragen oder innenseitig zwischen diesen beiden Glasscheiben angeordnet und damit im Display eingebettet. In beiden Fällen der Ausgestaltung ist das Heizelement mit elektrischen Kontakten 9 und 10 versehen. Mittels dieser Kontakte 9 und 10 ist das Heizelement mit einer Spannungsversorgung mit den Anschlüssen UB und GND verbindbar, wobei für die Spannungsversorgung üblicherweise das Bordnetz des Fahrzeugs gewählt wird. Die Nennspannung des Bordnetzes kann dabei je nach Fahrzeugkategorie zum Beispiel 12 Volt (PKW), 24 Volt (LKW und Busse) oder neuerdings auch 42 Volt betragen.

Heutige LC-Displays weisen in der Regel in einer mit den Glasscheiben verbundenen Baueinheit die zum Betrieb des LC-Displays erforderlichen elektronischen Schaltungsanordnungen auf, wie Treiber, Controller und Speicher. Auch werden Ausführungen angeboten, die auf den Glasscheiben bereits eine Meßeinrichtung 3 vorsehen, die in der Lage ist, die aktuelle Umgebungstemperatur am Display zu erfassen. Diese Meßeinrichtung 3 ist beispielsweise als ein NTC-Widerstand ausgestaltet.

Bei der Montage des LC-Displays 2 kann der Widerstandswert seines Heizelementes beispielsweise durch Anlegen eines Ohmmeters an den Kontakten 9 und 10 des Heizelementes in einem automatisierten Meßvorgang ermittelt werden. Der von dieser ersten Meßeinrichtung 4 ermittelte Meßwert wird dann unter Zuhilfenahme eines Programmiergerätes in einem beschreibbaren und auslesbaren Speicher 7 gespeichert, wobei dieser Speicher 7 mit einer Logikeinheit 6 verbunden ist und von dieser gesteuert wird. Diese Logikeinheit 6 sowie der Speicher 7 sind vorzugsweise durch den Controller des LC-Displays 2 realisiert und damit in der Baueinheit des LC-Displays 2 integriert. Für diesen Speicher 7 eignen sich EEPROM- und Flashspeicherbausteine.

Überdies erhält die Logikeinheit 6 auch Meßwerte über die Höhe der am Heizelement anliegenden Spannung sowie über die aktuelle Umgebungstemperatur am Display. Damit sind dann eine zweite Meßeinrichtung 5 und eine dritte Meßeinrichtung 3 realisiert, nämlich eine Meßeinrichtung 5 zur Ermittlung der Höhe der am Heizelement anliegenden Spannung sowie eine Meßeinrichtung 3 zur Erfassung der aktuellen Umgebungstemperatur am Display.

Aus diesen eingehenden Meßwerten ermittelt die Logikeinheit 6 unter Verwendung und Abarbeitung eines ihr zur Verfügung stehenden Programms, ob eine Bestromung des Heizelementes überhaupt erforderlich ist, und wenn dem so ist, welche Bestromungsdauer für das Heizelement notwendig ist, um diejenige Heizleistung aufzubringen, damit das Display innerhalb einer vorgegebenen Zeit auf eine bestimmte Betriebstemperatur erwärmt wird. Dabei kann auch die für die Erwärmung des LC-Displays zur Verfügung stehende Zeit einstellbar sein, im Bereich von zwei oder drei Sekunden liegen und zum Beispiel bei der Montage des LC-Displays mittels eines Programmiergerätes wertmäßig in dem mit der Logikeinheit 6 verbundenen Speicher 7 eingebbar sein.

Falls die Logikeinheit 6 feststellt, daß eine Bestromung des Heizelementes erforderlich ist, betätigt sie entsprechend den ermittelten Erfordernissen ein im Strompfad vom Heizelement zur Spannungsversorgung liegendes Schaltelement 8, beispielsweise durch Ausgabe eines pulsweitenmodulierten Signals an den Basisanschluß eines Transistors, sofern das Schaltelement 8 als ein Transistor ausgebildet ist. Als Schaltelement 8 können auch andere steuerbare Halbleiterschalter gewählt werden. Die Logikeinheit 6 unterbricht durch eine entsprechende Ansteuerung des Schaltelements 8 den Stromfluß durch das Heizelement, sobald die bei der Logikeinheit 6 eingehenden Meßwerte anzeigen, daß das LC-Display 2 eine ausreichende Betriebstemperatur erreicht hat. Durch diese Einflußnahme auf den Stromfluß durch das Heizelement wird die Heizleistung geregelt.

Die hier vorgeschlagene Regelung für die Heizung eines Displays hat den Vorteil, daß sie kostengünstig implementierbar ist, weil sie weitgehend auf an heutigen LC-Displays vorhandene Hardware-Komponenten zurückgreift (Logikeinheit, Speicher, Temperaturfühler). Durch Auslesen von zum Beispiel in Meßkurven ermittelten Kodierwerten, die in dem mit der Logikeinheit 6 verbundenen Speicher 7 zum Beispiel bei der Montage des LC-Displays 2 hinterlegbar sind, und einem anschließenden Einstellen der Bestromungsdauer des Heizelementes in Abhängigkeit vom jeweiligen Kodierwert kann unter den gegebenen Betriebsbedingungen für das aus einer dünnen Schicht aus einem Widerstandswerkstoff bestehenden Heizelement trotz erheblicher Schwankungen in der Spannungsversorgung, an die das Heizelement angeschlossen ist, und trotz einer großen Streubreite in den Widerstandswerten des Heizelementes eine in ihrer Wirkung optimierte Heizung für das Display verwirklicht werden.

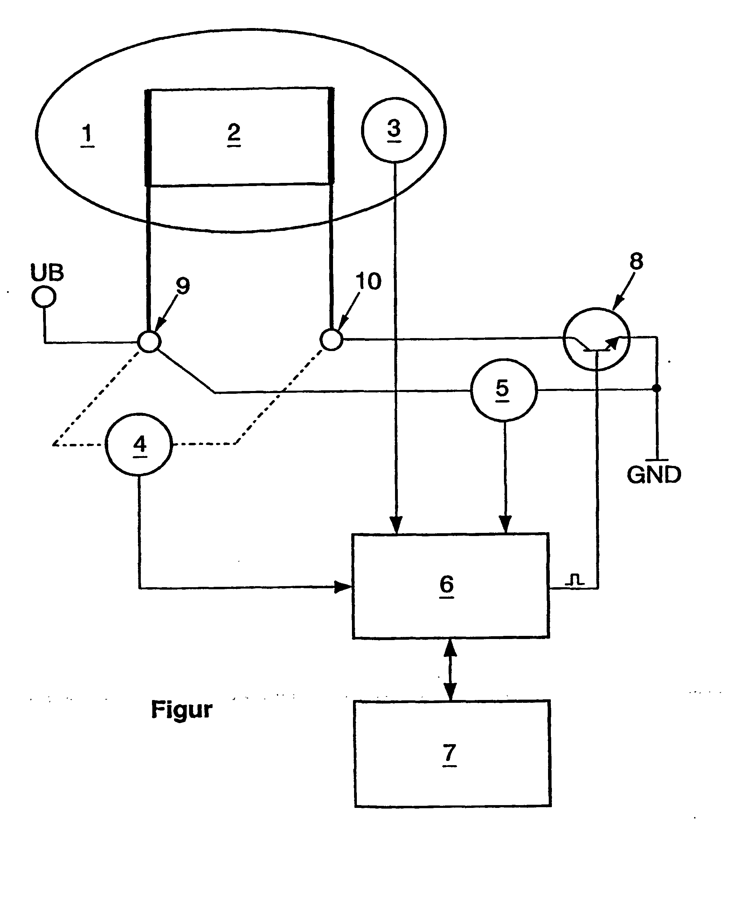

## Patentansprüche

1. Display mit einer Heizung,
1.1. wobei das Display mindestens ein Displayglas besitzt,
1.2. wobei die Heizung ein elektrisch betriebenes, mit einer Spannungsversorgung (UB, GND) verbundenes Heizelement besitzt,
1.3. wobei das Heizelement aus einer dünnen Schicht besteht,
1.4. wobei die Schicht aus einem einen elektrischen Widerstand bildenden Werkstoff besteht,
1.5. wobei die Schicht auf dem mindestens einen Displayglas flächig aufgetragen oder in dem Display flächig eingebettet ist,
1.6. wobei eine erste Meßeinrichtung (4) vorgesehen ist, die den Widerstandswert des Heizelementes ermittelt,
1.7. wobei eine zweite Meßeinrichtung (5) vorgesehen ist, die die Höhe der am Heizelement anliegenden Spannung ermittelt,
1.8. wobei eine dritte Meßeinrichtung (3) vorgesehen ist, die die aktuelle Umgebungstemperatur am Display erfaßt,
1.9. wobei ein von der Logikeinheit (6) betätigtes Schaltelement (8) vorgesehen ist, das für die ermittelte Bestromungsdauer den Stromfluß durch das mit der Spannungsversorgung (UB, GND) verbundene Heizelement regelt,
**dadurch gekennzeichnet,**
1.10. daß ein Speicher (7) vorgesehen ist, der den ermittelten Widerstandswert des Heizelementes speichert,
1.11. daß eine Logikeinheit (6) vorgesehen ist, die für den gespeicherten Widerstandswert in Abhängigkeit von der ermittelten Spannung und der ermittelten Umgebungstemperatur eine Bestromungsdauer für das Heizelement ermittelt, die notwendig ist, um diejenige Heizleistung aufzubringen, damit sich das Display innerhalb einer vorgegebenen Zeit auf eine bestimmte Betriebstemperatur erwärmt.

2. Display mit einer Heizung nach Anspruch 1,
**dadurch gekennzeichnet, daß** das Heizelement aus einer Schicht aus Indiumzinnoxid besteht.

3. Display mit einer Heizung nach einem der vorangegangenen Ansprüche,
**dadurch gekennzeichnet, daß** der Widerstandswert des Heizelementes bei der Montage des Displays ermittelt und in dem Speicher (7) gespeichert wird.

4. Display mit einer Heizung nach einem der vorangegangenen Ansprüche,
**dadurch gekennzeichnet, daß** zumindest die Logikeinheit (6), der Speicher (7) und die Meßeinrichtung (3) zur Ermittlung der aktuellen Umgebungstemperatur am Display durch Baueinheiten der zum Betrieb des Displays erforderlichen elektronischen Schaltungsanordnungen realisiert sind.

5. Display mit einer Heizung nach einem der vorangegangenen Ansprüche,
**dadurch gekennzeichnet, daß** das von der Logikeinheit (6) betätigte Schaltelement (8) ein Transistor oder ein anderer Halbleiterschalter ist, der von der Logikeinheit (6) durch ein pulsweitenmoduliertes Signal angesteuert wird.

6. Display mit einer Heizung nach einem der vorangegangenen Ansprüche,
**dadurch gekennzeichnet, daß** die Zeit zur Erwärmung des Displays auf die gewünschte Betriebstemperatur einstellbar und wertmäßig in dem mit der Logikeinheit (6) verbundenen Speicher (7) eingebbar ist.

7. Display mit einer Heizung nach einem der vorangegangenen Ansprüche,
**dadurch gekennzeichnet, daß** die Spannungsversorgung für das Heizelement das Bordnetz eines Fahrzeugs ist.

## Claims

1. Display with a heater,
1.1. the display having at least one display glass,
1.2. the heater having an electrically operated heating element connected to a voltage supply (UB, GND),
1.3. the heating element comprising a thin layer,
1.4. the layer consisting of a material forming an electrical resistance,
1.5. the layer being applied over a surface area to the at least one display glass or being embedded over a surface area in the display,
1.6. a first measuring instrument (4) being provided, which determines the resistance value of the heating element,
1.7. a second measuring instrument (5) being provided, which determines the level of the voltage present at the heating element,
1.8. a third measuring instrument (3) being provided, which senses the current ambient temperature at the display,
1.9. a switching element (8) actuated by the logic unit (6) being provided, which regulates the current flow through the heating element connected to the voltage supply (UB, GND) for the current-supplying period determined,
**characterized**
1.10. in that a memory (7) is provided, which stores the determined resistance value of the heating element,
1.11. in that a logic unit (6) is provided, which determines for the stored resistance value in accordance with the determined voltage and the determined ambient temperature a current-supplying period for the heating element necessary to produce that heat output which will heat up the display to a certain operating temperature within a predetermined time.

2. Display with a heater according to Claim 1, **characterized in that** the heating element comprises a layer of indium tin oxide.

3. Display with a heater according to one of the preceding claims, **characterized in that** the resistance value of the heating element is determined and stored in the memory (7) during the assembly of the display.

4. Display with a heater according to one of the preceding claims, **characterized in that** at least the logic unit (6), the memory (7) and the measuring instrument (3) for determining the current ambient temperature at the display are realized by structural units of the electronic circuit arrangements required for the operation of the display.

5. Display with a heater according to one of the preceding claims, **characterized in that** the switching element (8) actuated by the logic unit (6) is a transistor or some other semiconductor switch, which is activated by the logic unit (6) by a pulse-width-modulated signal.

6. Display with a heater according to one of the preceding claims, **characterized in that** the time for heating up the display to the desired operating temperature is adjustable and can be entered as a value in the memory (7) connected to the logic unit (6).

7. Display with a heater according to one of the preceding claims, **characterized in that** the voltage supply for the heating element is the onboard electrical system of a vehicle.

## Revendications

1. Ecran doté d'un chauffage,
1.1. où l'écran a au moins une vitre,
1.2. où le chauffage a un élément de chauffage fonctionnant électriquement relié à une alimentation en tension (UB, GND),
1.3. où l'élément de chauffage se compose d'une couche fine,
1.4. où la couche se compose d'une matière première formant résistance à l'électricité,
1.5. où la couche est apportée en nappe sur la au moins une vitre de l'écran ou intégrée en nappe dans l'écran,
1.6. où il est prévu un premier dispositif de mesure (4), qui détermine la valeur de la résistance de l'élément de chauffage,
1.7. où il est prévu un deuxième dispositif de mesure (5), qui détermine la valeur de la tension appliquée à l'élément de chauffage,
1.8. où il est prévu un troisième dispositif de mesure (3), qui détecte en temps réel la température ambiante au niveau de l'écran,
1.9. où il est prévu un élément de commutation (8), actionné par l'unité logique (6) et qui règle, pour le temps de mise sous tension déterminé, le courant traversant l'élément de chauffage relié à l'alimentation en tension (UB, GND)
**caractérisé par** le fait
1.10. qu'il est prévu une mémoire (7), qui mémorise la valeur déterminée pour la résistance de l'élément de chauffage,
1.11. qu'il est prévu une unité logique (6), qui détermine, pour la valeur de la résistance mémorisée et en fonction de la tension déterminée et de la température ambiante déterminée, une durée de mise sous tension de l'élément de chauffage, qui est nécessaire pour développer la puissance de chauffage permettant à l'écran de se réchauffer, en un temps déterminé, à une température de fonctionnement déterminée.

2. Ecran doté d'un chauffage selon la revendication 1
**caractérisé par le fait que** l'élément de chauffage se compose d'une couche d'oxyde d'étain dopé à l'indium.

3. Ecran doté d'un chauffage selon l'une des revendications précédentes
**caractérisé par le fait que**, lors du montage de l'écran, la valeur de la résistance de l'élément de chauffage est déterminée et mémorisée dans la mémoire (7).

4. Ecran doté d'un chauffage selon l'une des revendications précédentes
**caractérisé par le fait que** au moins l'unité logique (6), la mémoire (7) et le dispositif de mesure (3), destiné à la détermination en temps réel de la température ambiante au niveau de l'écran, sont réalisés par des unités constructives des circuits électroniques nécessaires au fonctionnement de l'écran.

5. Ecran doté d'un chauffage selon l'une des revendications précédentes
**caractérisé par le fait que** l'élément de commutation (8) actionné par l'unité logique (6) est un transistor ou un autre commutateur à semi-conducteurs, qui est commandé par l'unité logique (6) à l'aide d'un signal modulé en largeur d'impulsion.

6. Ecran doté d'un chauffage selon l'une des revendications précédentes
**caractérisé par le fait que** le temps destiné au réchauffement de l'écran est réglable sur la température de fonctionnement souhaitée et que sa valeur peut être mémorisée dans la mémoire (7) reliée à l'unité logique (6).

7. Ecran doté d'un chauffage selon l'une des revendications précédentes
**caractérisé par le fait que** l'alimentation en tension pour l'élément de chauffage est le réseau de bord d'un véhicule.
